# EUROPEAN PATENT APPLICATION

(11) **EP 2 842 831 A1**
(43) Date of publication of application: **04.03.2015**
(21) Application number: 13782404.1
(22) Date of filing: 12.04.2013
(51) Int. Cl.: B62D 1/06

(54) **HANDLE, METHOD FOR MANUFACTURING HANDLE, AND DEVICE FOR MANUFACTURING HANDLE**

(30) Priority: 27.04.2012 JP 2012104109
(71) Applicant: NIHON PLAST CO., LTD., Fujinomiya-shi Shizuoka 418-0111 (JP)
(72) Inventor: YAMADA Satoshi, Fujinomiya-shi Shizuoka 418-0111 (JP); HARADA Hiromitsu, Fujinomiya-shi Shizuoka 418-0111 (JP); UEMATSU Nobutaka, Fujinomiya-shi Shizuoka 418-0111 (JP); OKITA Akira, Fujinomiya-shi Shizuoka 418-0111 (JP)
(74) Representative: Hancox, Jonathan Christopher
(86) International application number: PCT/JP2013/061045
(87) International publication number: WO 2013/161585

(57) **Abstract**

A groove portion (21) isarranged, along a circumferential direction of a circular arc, in a cover portion (20) of a circular rim portion (15). A heater wire (22) is housed in the groove portion (21). An outer layer portion (23) is arranged which covers the heater wire (22) and the cover portion (20) of the rim portion (15). With a simple configuration, a line of the heater wire (22) is less likely to stand out on the outer layer portion (23) to cover the cover portion (20) of the rim portion (15) and the heater wire (22). It is possible to ensure a good appearance and improve productivity.

## Description

### TECHNICAL FIELD

The present invention relates to a steering handle provided with a heater wire that is housed in a groove portion and generates heat by energization, and also relates to a method and an apparatus for manufacturing the same.

### BACKGROUND ART

Conventionally, there is known a configuration in which when an automobile, which is a vehicle parked outdoors in winter, is started for driving, in order to alleviate the difficulty in operation and an unpleasant feeling because a so-called steering handle, i.e., a steering wheel, is too cold, a heater wire is incorporated in a rim portion of the steering wheel to warm the steering wheel while other various mechanisms are not sufficiently warm just after the engine is started so as to improve the comfortability.

Known configurations include that in which a material in which a heater wire is woven (preparatory compact) is used, and the resultant material is attached (coupled) to a cover material such as leather, which is an outer layer body, and the cover material, together with the material, is attached to the rim portion so that the profile of the heater wire portion does not stand out (for example, see Patent Document 1), or that in which a net-shaped heater wire having elasticity is wound around the rim portion (for example, see Patent Document 2).

### CITATION LIST

### Patent Literature

PTL 1: Japanese Laid-Open Patent Publication No. 4-15162 (pages 4 to 6, Fig. 2)
PTL 2: Japanese Laid-Open Patent Publication No. 2002-96739 (pages 3 to 6, Fig. 1)

### SUMMARY OF INVENTION

### Technical Problem

In the above-described configuration, it is preferable that a soft heater wire having a small diameter is used so that a heater wire line does not stand out on the surface of the steering wheel. This makes it difficult to introduce automation and to use a labor-saving jig as a deliberate task is required to ensure that disconnection is not generated in an incorporating step, and this results in a problem that it is not easy to improve productivity.

The present invention has been achieved in view of the above problem and an object thereof is to provide a steering handle capable of incorporating a heater wire thereinto, securing a good appearance, and improving productivity, and to provide a method and an apparatus for manufacturing the same.

### Solution to Problem

A steering handle according to claim 1 includes: an operation rim portion having a shape at least partially along a circular arc; a groove portion arranged, along a circumferential direction of the circular arc, on a surface portion of the rim portion; a heater wire that is housed in the groove portion and generates heat by energization; and an outer layer portion that covers the heater wire and the surface portion of the rim portion.

A steering handle according to claim 2 is the steering handle according to claim 1, wherein, in the rim portion, at least a surface portion is made from an elastic body, and in the groove portion, an opening portion communicating with at least the outside of the rim portion is set to be smaller than an outer diameter dimension of the heater wire.

A steering handle according to claim 3 is the steering handle according to claim 1 or 2, wherein, on the surface portion of the rim portion, a crossing groove portion crossing the groove portion is arranged, and the heater wire is continuously housed in the crossing groove portion and the groove portion.

A steering handle according to claim 4 is the steering handle according to any one of claims 1 to 3, wherein a plurality of groove portions are arranged, and on the surface portion of the rim portion, a connection groove portion for connecting the groove portions is arranged, and the heater wire is continuously housed in the connection groove portion and each groove portion.

A method for manufacturing a steering handle according to claim 5 is a method of manufacturing a steering handle which includes: an operation rim portion having a shape at least partially along a circular arc; a groove portion arranged, along the circular arc, on a surface portion of the rim portion; a heater wire that is housed in the groove portion and generates heat by energization; and an outer layer portion that covers the heater wire and the surface portion of the rim portion, the method including: forming the groove portion, by using a cutting member, on the surface portion of the pre-formed rim portion; and housing the heater wire in the groove portion.

An apparatus for manufacturing a steering handle according to claim 6, including: an operation rimportion having a shape at least partially along a circular arc; a groove portion arranged, along the circular arc, on a surface portion of the rim portion; a heater wire that is housed in the groove portion and generates heat by energization; and an outer layer portion that covers the heater wire and a surface portion of the rim portion, the apparatus including: a cutting member for forming the groove portion on the surface portion of the rim portion by relative movement with respect to the rim portion; and a compressing member for compressing the heater wire into the groove portion while relatively moving with respect to the rim portion.

### Advantageous Effects of Invention

Based on a steering handle according to claim 1, a heater wire is housed in a groove portion arranged, along a circular arc, on a surface portion of a rim portion having a shape at least partially along a circular arc and an outer layer portion to cover the surface portion of the rim portion and the heater wire is arranged, and as a result, with a simple configuration, a line of the heater wire is less likely to stand out on the outer layer portion. Therefore, it is possible to ensure a good appearance and improve productivity while incorporating a heater wire.

Based on the steering handle according to claim 2, in addition to the effect provided in the steering handle according to claim 1, on the surface portion, of the rim portion, made from an elastic body, the groove portion is arranged so that the opening portion communicating with at least the outside of the rim portion is set to be smaller than an outer diameter dimension of the heater wire, and it is thus possible to elastically hold the heater wire housed in the groove portion by the surface portion of the rim portion and further facilitate a task of housing the heater wire, and accordingly, it is possible to further improve the productivity.

Based on the steering handle according to claim 3, in addition to the effect provided in the steering handle according to claim 1 or 2, on the surface portion of the rim portion, a crossing groove portion is formed along a direction crossing the groove portion and the heater wire is continuously housed in the crossing groove portion and the groove portion, and it is thus possible to pull out a part of the heater wire, by the crossing groove portion, to an inner circumferential side, etc., of the rim portion, and accordingly, it is possible to more easily connect the heater wire to a power supply, etc.

Based on the steering handle according to claim 4, in addition to the effect provided in the steering handle according to any one of claims 1 to 3, a plurality of groove portions arranged on the surface portion of the rim portion are connected by a connection groove portion and the heater wire is continuously housed in the connection groove portion and each groove portion, and it is thus possible to easily dispose one heater wire over a wider area on the surface portion of the rim portion.

Based on a method for manufacturing a steering handle according to claim 5, when the groove portion is formed, by a cutting member, on the surface portion of the pre-formed rim portion, it is possible to easily form the groove portion, and when the heater wire is housed in the groove portion, the line of the heater wire is less likely to stand out on the outer layer portion covering the surface portion of the rim portion and the heater wire. Therefore, it is possible to ensure a good appearance and improve productivity while incorporating a heater wire.

Based on an apparatus for manufacturing a steering handle according to claim 6, when the groove portion is formed, by a cutting member, on the surface portion of the rim portion, it is possible to easily form the groove portion, and when the heater wire is housed in the groove portion by compressing the heater wire by a compressing member, the line of the heater wire is less likely to stand out on the outer layer portion covering the surface portion of the rim portion and the heater wire. Therefore, it is possible to ensure a good appearance and improve productivity while incorporating a heater wire.

### BRIEF DESCRIPTION OF DRAWINGS

Fig. 1 shows a first embodiment of the present invention, Fig. 1 (a) being a front view showing a part of a steering handle, Fig. 1 (b) being a perspective cross-sectional view of the part thereof, and Fig. 1 (c) being a cross-sectional view taken at a location corresponding to a line I-I of Fig. 1(a).
Fig. 2 is an explanatory diagram schematically showing an apparatus for manufacturing the steering handle.
Fig. 3 is an explanatory diagram showing, in order from (a) to (d), a method for manufacturing the steering handle.
Fig. 4 is a side view showing a part of a steering handle according to a second embodiment of the present invention.
Fig. 5 is a side view showing a part of a steering handle according to a third embodiment of the present invention.
Fig. 6 shows a part of a steering handle according to a fourth embodiment of the present invention, Fig. 6 (a) being a side view thereof, Fig. 6(b) being a cross-sectional view taken at a location corresponding to a line II-II of Fig. 6(a), and Fig. 6(c) being a cross-sectional view taken at a location corresponding to a line III-III of Fig. 6(a).
Fig. 7 shows a part of a steering handle according to a fifth embodiment of the present invention, Fig. 7 (a) being a perspective view thereof, and Fig. 7(b) being a side view thereof.
Fig. 8 shows a part of a steering handle and an apparatus for manufacturing the same according to a sixth embodiment of the present invention, Fig. 8 (a) being a side view showing a step of cutting a groove portion by a cutting member, Fig. 8(b) being a cross-sectional view of the groove portion, and Fig. 8(c) being a front view showing a part of the groove portion.
Fig. 9 is a side view showing a part of a steering handle and an apparatus for manufacturing the same according to a seventh embodiment of the present invention.
Fig. 10 is a side view showing a part of a steering handle and an apparatus for manufacturing the same according to an eighth embodiment of the present invention.

### DESCRIPTION OF EMBODIMENTS

A first embodiment of a steering handle of the present invention will be described with reference to the drawings, below.

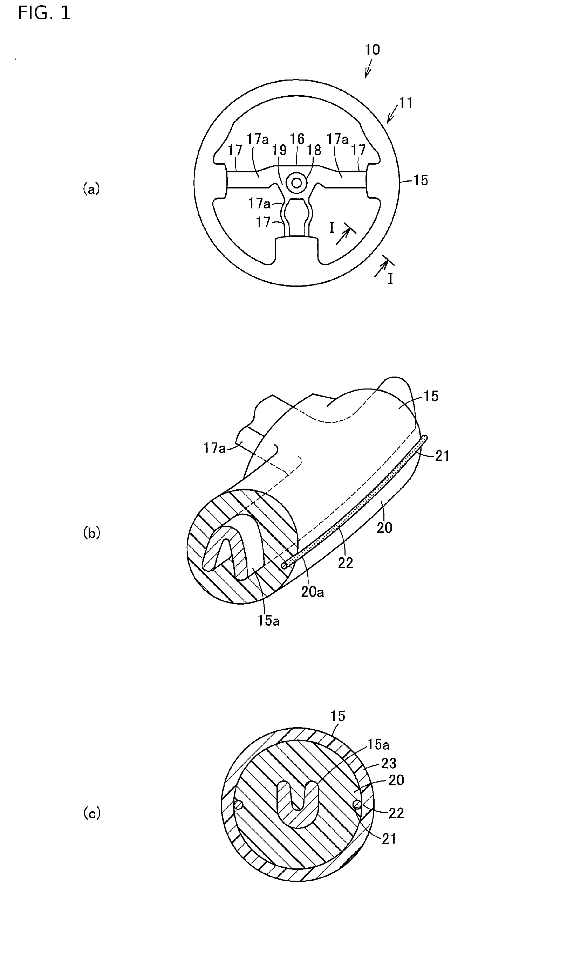

In Fig. 1, reference numeral 10 denotes a steering wheel, which is a so-called steering handle of an automobile, for example, as a vehicle, and the steering wheel 10 is provided with: a steering handle main body 11, which is a main body of a so-called steering handle; an air bag device (air bag module), which is a center pad as a pad body not shown, which is attached to a passenger side of the steering wheel main body 11; a switch module not shown, etc. In addition, the steering wheel 10 is attached to a steering shaft provided on a vehicle, generally, in an inclined state, and the description will be made where a passenger side of the air bag device, that is, a front surface side, is an upper side, a steering shaft side, that is, a back surface side, is a lower side, a front of the vehicle, that is, a windshield side at an upper front side, is a front side, and a rear of the vehicle, that is, a rear lower side, is a rear side or a nearer side.

Further, the steering wheel main body 11 includes: a rim portion (ring portion) 15 formed at least partially along the circumference and used as a gripping portion formed in an annular shape in the present embodiment; a boss portion 16 positioned inside the rim portion 15; and a plurality, e.g., three in the present embodiment, of spoke portions 17 for coupling the rim portion 15 and the boss portion 16. At a lower portion, which is a body side of the boss portion 16, a substantially cylinder-shaped boss 18 is arranged which is provided with a serration structure meshed with the steering shaft, and a boss plate 19 configuring a core body, which is called a hub core, is integrally fixed to the boss 18, where the boss plate 19 is molded by gravity casting, injection molding and the like on, for example, an magnesium alloy. Further, to the boss portion 16, a lower cover made from resin, also called a back cover or a body cover, not shown, is attached to cover a lower side of the boss portion 16. A core metal 17a of the spoke portion 17 is integrally arranged to extend from the boss plate 19, or is fixed by welding, etc. Moreover, to the core metal 17a of the spoke portion 17, a core metal 15a of the rim portion 15 is fixed by welding, etc.

Further, the rim portion 15 is provided with the core metal 15a and a cover portion 20 to cover a surface side of the entire circumference of the core metal 15a. On an outer circumference 20a of the surface portion of the cover portion 20, a groove portion 21 is arranged, and in the groove portion 21, a heater wire 22 to generate heat by energization is housed along the groove portion 21. The cover portion 20 and the heater wire 22 are covered with a thin-skinned outer layer portion 23.

For the cover portion 20, in the present embodiment, a molded product obtained by fine-foaming, for example, a soft foamed polyurethane resin, which is an elastic body, is used. Then, the cover portion 20 is molded, for example, by inserting the core metal 15a and the core metal 17a in a mold die that is opened and closed vertically.

Further, the groove portion 21 is a shallow linear groove continuously formed in an annular shape across the entire circumference of the rim portion 15, at a position of the outer circumference 20a, which is a center portion in the up-down direction of the cover portion 20, i.e., a position corresponding to a parting line generated by a mold die for molding the cover portion 20, in other words, in a direction crossing (orthogonal to) an open/close direction of the molding die. In the present embodiment, the groove portion 21 includes a bottom surface portion 21a along a circumferential direction of the rim portion 15 (cover portion 20), and side surface portions 21b, 21b continued to the outer circumference 20a of the cover portion 20 from the upper portion and the lower portion of the bottom surface portion 21a. That is, a gap between the side surface portions 21b, 21b is the opening portion 21c communicating the groove portion 21 with the outside of the rim portion 15. Further, a distance (e. g. , 0. 5 mm) between the side surface portions 21b, 21b, which is a width dimension of the groove portion 21, is each set to equal to or less than an outer diameter dimension of the heater wire 22, and a distance (e. g. , 0 7 mm) from the opening portion 21c to the bottom surface portion 21a, which is a depth dimension of the groove portion 21, is set to an approximately constant value, which is greater than the width dimension and substantially equal to the outer diameter dimension (e.g., 0.75 mm) of the heater wire 22. Therefore, the heater wire 22 housed in the groove portion 21 is held vertically by the side surface portions 21b, 21b, and does not protrude toward the outside of the cover portion 20.

Further, the heater wire 22 is a single wire obtained by arranging an insulation film made of, for example, fluororesin (PTFE, etc.), on the surface of the core wire that generates heat during energization, for example. The heater wire 22 is connected to a control circuit (thermo controller) provided with a power supply, a thermister, etc., not shown, inside the air bag device or a lower cover, and is configured to generate heat by being energized by the control circuit.

Further, the outer layer portion 23 covers the cover portion 20 and the heater wire 22 and is insert-molded (over molded) on the surface of the cover portion 20. For a material of the outer layer portion 23, in the present embodiment, a soft unfoamed (solid) polyurethane resin not colored by, for example, ultraviolet rays, can be used. That is, the outer layer portion 23 does not only mean natural leather but also any thin-skinned member (including artificial leather) that covers the cover portion 20 and the heater wire 22. The outer layer portion 23 is molded by inserting a base (cover portion 20) with, for example, the heater wire 22 being disposed thereon, into a mold die not shown and injecting a reaction mixture, that results in polyurethane by reaction, into a mold die (RIM type).

Further, the air bag device is provided with a bag-shaped air bag, a cover body made of resin for covering a folded air bag, an inflator for injecting gas, etc., and is configured so that when an automobile is in a collision, etc., the gas is promptly injected into the interior of the air bag from the inflator, the air bag housed in a folded state is quickly expanded, the cover body is broken apart, the air bag is expanded and developed toward the front of an occupant so that the occupant is protected. In addition, in the air bag device, a horn switch mechanism which is a switch device may be integrally incorporated.

Next, a manufacturing apparatus 31 of the steering wheel 10 will be described.

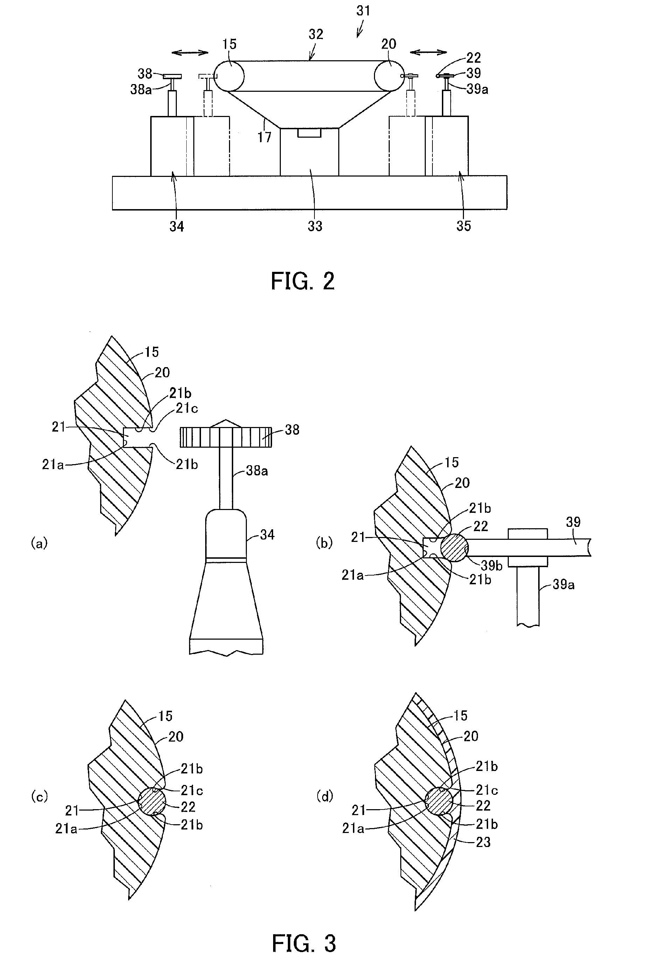

The manufacturing apparatus 31 shown in Fig. 2 is for forming the groove portion 21 in an intermediate body 32 in which the rim portion 15 is formed by covering the core metal 15a integrally formed relative to the boss portion 16 by the core metal 17a of the spoke portion 17 with the cover portion 20 and for compressing the heater wire 22, and includes a rotary device 33 for rotating the intermediate body 32 and a cutting device 34 and a compressing device 35 arranged to be advanced and retracted relative to the intermediate body 32 attached to the rotary device 33.

The rotary device 33 includes a motor not shown, etc., fixes the intermediate body 32 so that, for example, the shaft direction runs along the up-down direction, and rotates the intermediate body 32, at a constant speed, along the circumferential direction of the rim portion 15.

Further, the cutting device 34 includes a motor not shown, and a rotary blade 38, which is a cutting member rotationally driven by the motor, and is disposed at one side with respect to the rotary device 33. In the present embodiment, the disk-shaped rotary blade 38 of which the outer circumference has a tooth portion and which has a rotation shaft 38a penetrating in a thickness direction at a center position in a plan view may be used, and is disposed so that the rotation shaft 38a corresponds to a direction parallel to the intermediate body 32 fixed at the rotary device 33. When the cutting device 34 detects a position relative to the rimportion 15 and performs NC control, the cutting device 34 is capable of milling the cover portion by moving the outer circumference of the rotary blade 38 toward and away from, for example, the outer circumference 20a, of the cover portion 20 of the rim portion 15.

Further, the compressing device 35 includes a compressing roller 39, which is a freely rotating compressing member, and a tension pulley not shown, which is a tension application member for applying a tension to the heater wire 22, and is disposed at the other side of the rotary device 33, i.e., at the opposite side of the cutting device 34. The compressing roller 39 includes a rotation shaft 39a along a direction parallel to the intermediate body 32 fixed to the rotary device 33, and is provided, at its outer circumference, with a recessed groove 39b for fittingly holding the heater wire 22. In addition, the heater wire 22 is arranged in length, wound around a freely rotatable drum (spool) not shown, etc., and can be fed sequentially to the compressing roller 39 via the tension pulley from the drum. When the cutting device 34 detects a position relative to the rimportion 15 and performs NC control, the cutting device 34 is capable of moving the outer circumference of the compressing roller 39 toward and away from the cover portion 20 of the rim portion 15.

When the steering wheel 10 is manufactured, first, the intermediate body 32 is pre-formed.

When the intermediate body 32 is formed, a surface modifying coating for improving the joint strength between the cover portion 20 and the outer layer portion 23, e.g., a two liquid urethane-based coating containing polyol and polyisocyanate, for example, is pre-coated to the cavity surface of the mold die with a predetermined coating thickness (for example, 5 to 25 µm, preferably 5 to 15 µm, for example, 10 µm or more) by using a spray, etc., the core metal 15a and the core metal 17a are inserted into the mold die and the mold die is closed, and the foamed polyurethane resin is injected into the mold die to mold the intermediate body 32. At this time, the surface modifying coating is in an unreacted state immediately after the application because the surface modifying coating is hardened by a reaction heat of the molded resin, and in contact with the resin in a reaction while a good affinity state is maintained, the surface modifying coating and the resin are integrated to form the surface. In this state, the cover portion 20 of the intermediate body 32 has about, for example, 45 to 50 of wettability, and a primer (adhesive) during the formation of the outer layer portion 23 in a post process is settled, and the boundary joint strength with the outer layer portion 23 is thus improved.

Next, the resultant intermediate body 32 is attached and fixed to the rotary device 33, and the rim portion 15 is rotated at low speed by the rotary device 33 in the circumferential direction.

In this state, when the cutting device 34 brings the rotary blade 38 close to and presses and contacts the rotary blade 38 against the outer circumference 20a of the cover portion 20 of the rim portion 15 while rotating the rotary blade 38 at high speed, the rotary blade 38 continuously cuts the outer circumference 20a of the cover portion 20 along the circumferential direction to form the groove portion 21 (Fig. 3 (a)). The cutting device 34 forms the groove portion 21 with a necessary length, which is across, for example, the entire circumference of the rim portion 15, and then, moves the rotary blade 38 away from the cover portion 20 of the rim portion 15.

Next, when the remote end side of the heater wire 22 is fixed at a predetermined position such as the cover portion 20 of the rim portion 15, the outer circumferential side of the compressing roller 39 of the compressing device 35 is inserted into the groove portion 21 and the intermediate body 32 (rim portion 15) is rotated by the rotary device 33. As a result, the heater wire 22 held in the recessed groove 39b is fed by the compressing roller 39 along with the rotation of the intermediate body 32 (rim portion 15) and at the same time sequentially compressed along the groove portion 21 (Fig. 3(b)). At this time, a distance between the side surface portions 21b, 21b of the groove portion 21, i.e., the opening portion 21c, is smaller than an outer diameter dimension of the heater wire 22, and thus, the heater wire 22 compressed into the groove portion 21 is held between the side surface portions 21b, 21b by the return deformation of the cover portion 20 (groove portion 21), and is housed and held in the groove portion 21 (Fig. 3(c)). Further, the heater wire 22 abuts the bottom surface portion 21a of the groove portion 21, and is not buried any further inside the cover portion 20. In this state, the outer circumference of the heater wire 22 and the surface at the side of the outer circumference of the cover portion 20 are substantially flush along a virtual plane surface.

Further, after a required dimension of the heater wire 22 is housed in the groove portion 21, the compressing roller 39 is separated from the cover portion 20 of the rim portion 15 and the heater wire 22 is cut. In addition, the heater wire 22 at the drum side is supplied for the manufacture of the next steering wheel 10, and thus, no waste is generated.

Thereafter, the rotary device 33 is stopped and the intermediate body 32 is removed, and the heater wire 22 and the cover portion 20 of the intermediate body 32 are collectively covered with the outer layer portion 23 (Fig. 3(d)). Specifically, mold coat is pre-coated by a predetermined coating thickness (in order to maintain an appearance and a performance, for example, 5 to 25 µm, preferably, 5 to 15 µm, and for example, about 10 µm) to a cavity surface of a mold die for molding the outer layer portion 23, and the intermediate body 32 obtained by applying primer containing an isocyanate group, for example, on the surface of the cover portion 20 is inserted into the mold die, which is closed, and a polyurethane resin is injected into the mold die and the outer layer portion 23 is molded to have a thickness of, for example, 2 mm or less. At this time, the cover portion 20 of the intermediate body 32 in which the wettability of the surface is improved by the surface modifying coating while being molded has a good affinity with the primer, and an intermolecular force is exerted between the surface modifying coating and the primer so that the outer layer portion 23 and the cover portion 20 are strongly adhered. Further, the heater wire 22 neither greatly protrudes nor recesses from the cover portion 20, and thus, it is possible for a resin liquid for molding urethane of the outer layer portion 23 to keep a laminar flow state and possible to mold the uniform outer layer portion 23 having no bubbles (voids).

Next, a gate, an overflow portion, and burr formed along with molding the outer layer portion 23 are removed where necessary, and a terminal, a connector, etc., for connecting the control circuit are attached to both terminals of the heater wire 22 disposed to be extended beyond the spoke portion 17.

Further, when the air bag device, a back cover, a switch module, and a finisher, etc., are attached, the heater wire 22 is completely hidden, and the steering wheel 10 is completed which has an appearance that does not allow for distinguishing, in outward view, whether the heater wire 22 is incorporated or not at a glance.

In the steering wheel 10 thus manufactured, even when the heater wire 22, that is difficult to be disconnected and that has a relatively thick outer diameter dimension, is used, with a simple configuration, the line of the heater wire 22 is less likely to stand out on the outer layer portion 23, and thus, it is possible to incorporate the heater wire 22, ensure a good appearance, and improve productivity.

In addition, the heater wire 22 is disposed along the outer circumference of the rim portion 15, and, thus, it is possible to effectively obtain a heating effect on an occupant's palm holding the rim portion 15.

In the cover portion 20, which is the surface portion, of the rim portion 15, formed of polyurethane, which is an elastic body, the groove portion 21 is arranged so that the opening portion 21c communicating with at least the outside of the rim portion 15 is set to be smaller than an outer diameter dimension of the heater wire 22, and it is thus possible to elastically hold the heater wire 22 housed in the groove portion 21 by the cover portion 20 of the rim portion 15 and further facilitate a task of housing the heater wire 22, and accordingly, it is possible to further improve the productivity.

Further, generally, the foamed polyurethane has a heat-insulation tendency and the non-foamed polyurethane has a heat-conduction tendency, and thus, when the cover portion 20 housing the heater wire 22 into the groove portion 21 is molded of formed polyurethane and the outer layer portion 23 covering the cover portion 20 is molded of non-foamed polyurethane, if the heater wire 22 is energized, then the outer layer portion 23 increases in temperature, and therefore, it is possible to warm not only a position corresponding to the heater wire 22 but also a surrounding area thereof. Thus, it is possible to allow a user to feel the warmth in a range wider than the outer diameter dimension (wire diameter) of the heater wire 22.

Further, the cover portion 20 is capable of enclosing the heater wire 22 so that the cross sectional shape thereof is rectified, and thus, at a position at which the heater wire 22 is incorporated, it is easy to obtain a plane surface (or a surface approximate to a plane surface). Therefore, the line of the heater wire 22 does not appear (does not stand out) in the outer layer portion 23 covering the cover portion 20, and when a reaction liquid of polyurethane for molding the outer layer portion 23 is flown, a flow disturbance is not easily generated. As a result, the quality of the outer layer portion 23 formed by the reaction liquid, i.e., the appearance is further improved.

Further, the heater wire 22 can be positioned by compressing the heater wire 22 into the groove portion 21, and thus, it is not needed to bond the heater wire 22 across its entire length, the heater wire 22 can be partially bonded, or non-bonded, for example, and thus, it is possible to decrease the number of bonding steps or delete the bonding steps, resulting in further improvement of productivity. In addition, the heater wire 22 is reliably positioned with a simple structure and attached, therefore excellent workability can be provided and variation in performance is less likely to occur.

Further, when the depth dimension of the groove portion 21 is set so that the heater wire 22 housed in the groove portion 21 is substantially flush with the outer circumference side of the cover portion 20, it is possible to easily bring the heater wire 22 substantially flush with the outer circumference side of the cover portion 20 just by compressing the heater wire 22 into the bottom surface portion 21a so that heater wire 22 abuts the bottom surface portion 21a.

Further, in the manufacturing apparatus 31, when the groove portion 21 is formed, after molding the cover portion 20, by using the rotary blade 38, unlike a case where the groove portion is formed by a die while molding the cover portion 20, it is possible to prevent a defective flowing and filling of the material while molding the cover portion 20 and it is possible to easily form the groove portion 21.

That is, when the cover portion 20 is molded by using polyurethane by using a die, a slide structure is needed in order to form the groove portion in a position other than the open/close direction of the die (a position other than an upper side or a lower side of the rim portion 15), and when the slide structure is used, it may be possible that the slide structure cannot move as a result of the material entering between the slide structure and the die, and thus, it is not suitable for mass production. Further, when the groove portion is formed while molding the polyurethane, a resin material of the polyurethane adheres near the opening portion of the groove portion and it is not easy to maintain stable quality and it is not easy, either, to reliably fix the heater wire in such a groove portion. Therefore, in the present embodiment, when the groove portion 21 is cut by using the rotary blade 38 after molding the cover portion 20, it is possible to form the groove portion 21 accurately while reliably preventing the molding defective of the cover portion 20, etc.

Further, the processed surface of the cover portion 20 cut by the rotary blade 38 has more fine depressions and protrusions as compared to an unprocessed surface of the cover portion 20 forming a smooth surface along a die surface. That is, while molding the cover portion 20, after forming the smooth surface as a transcription of the die surface, the smooth surface of the processed surface is cut by the rotary blade 38 and an inner bubble of foamed polyurethane is cut open. The remaining bubble that is cut at the surface side is opened, on the surface, like a concave, and thus, when the smooth surface contacts the heater wire 22, a close contact relationship is established; however, when the smooth surface contacts a large number of bubbles opened by the cutting, a more coarse contact relationship is established than the smooth surface. This provides more heat insulation effect to lessen the amount of heat to be transferred to the inside.

Further, as the heater wire 22, a heat wire having a significant outer diameter dimension (wire diameter) can be used, and thus, it is possible to provide a heat generation function even when a large number of heater wires 22 are not arranged, and accordingly, it is possible to reduce the risk of disconnection, facilitate the handling during a step of manufacturing the steering wheel 10, render productivity and yield improved, decrease manufacturing costs and component costs, and be manufactured at a high efficiency.

Further, it suffices to compress to bury the heater wire 22 into the groove portion 21, and thus, the present invention is suitable for automation where the compressing device 35 (compressing roller 39), etc., is used.

Moreover, the heater wire 22 is compressed into the groove portion 21 by using the compressing device 35 (compressing roller 39), and thus, it is not necessary to pre-form a net by the heater wire 22 to simplify the steps and it is also possible to use the heater wire 22 having a relatively thick outer diameter dimension where disconnection is unlikely to occur. As a result, it is possible to use the heater wire 22 by winding the long heater wire 22 around the drum and paying out the heater wire 22 by the required length, and therefore, a waste of a material of the heater wire 22 which otherwise would occur in a step of manufacturing a net is not generated.

Further, as the wettability is improved by using the surface modifying coating while molding the cover portion 20, the primer is easily settled and the adhesion strength when molding the outer layer portion 23 by covering the cover portion 20 is thus improved. Moreover, it suffices to apply the surface modifying coating to the mold die, and thus, it is possible to improve the quality in the molding steps, and it is not necessary to increase the facility and the number of steps, hence good workability is brought about.

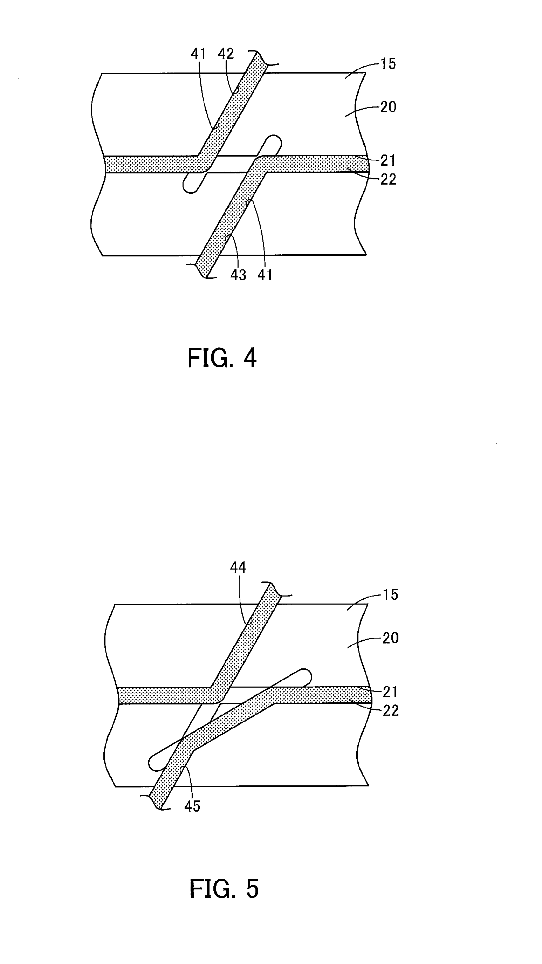

Next, a second embodiment will be described with reference to Fig. 4. In addition, a configuration and an operation in the same way as in the above-described first embodiment will be assigned identical reference numerals and symbols to omit duplicated description.

In the present embodiment, in addition to the groove portion 21 according to the above-described first embodiment, in the cover portion 20, which is a surface portion of the rim portion 15, a crossing groove portion 41 is formed along a direction crossing the groove portion 21.

The crossing groove portions 41 extend from the groove portion 21 toward an inner circumferential side of the rim portion 15, in a position corresponding to the spoke portion 17, for example, are inclined in a lateral surface view, and run almost parallel to each other. To the crossing groove portion 41, in the present embodiment, for example, one and other crossing groove portions 42, 43 are set. Further, the one crossing groove portion 42 extends from the groove portion 21 toward the spoke portion 17 side via an upper side of the rim portion 15 (cover portion 20), and the other crossing groove portion 43 extends from the groove portion 21 toward the spoke portion 17 side via a lower side of the rim portion 15 (cover portion 20).

Further, one end side of the heater wire 22 is housed in the one crossing groove portion 42, continued from the one crossing groove portion 42 to the groove portion 21, and housed, in the groove portion 21, to be circled along the circumferential direction of the rim portion 15, and the other end side thereof is continuously housed from the groove portion 21 to the other crossing groove portion 43. That is, the heater wire 22 is housed across the one crossing groove portion 42, the groove portion 21, and the other crossing groove portion 43. Further, the ends of the heater wire 22 each extend from ends of the crossing groove portion 41 (crossing groove portions 42, 43), and are connected to the control circuit, etc.

During the formation of the crossing groove portion 41, the rotary blade 38 of the cutting device 34 may be used to control the position of the rotary blade 38, and, for example, a crossing groove portion-use cutting device (crossing groove portion-use cutting member) not shown, separately configured similarly to the cutting device 34, for forming the crossing groove portion 41 may be used.

Further, when the heater wire 22 is disposed, the remote end side of the heater wire 22 is fitted to, for example, the other crossing groove portion 43, the outer circumferential side of the compressing roller 39 of the compressing device 35 is inserted into the groove portion 21 and the intermediate body 32 (rim portion 15) is rotated by the rotary device 33. Then, after the heater wire 22 is housed by a required dimension into the groove portion 21, the compressing roller 39 is separated from the cover portion 20 of the rim portion 15 and the heater wire 22 is cut, and the end of the heater wire 22 protruding from the groove portion 21 is fitted, for example, to the one crossing groove portion 42. Thereafter, the rotary device 33 is stopped and the intermediate body 32 is removed, and the intermediate body 32 is inserted into the mold die, and the heater wire 22 and the cover portion 20 are collectively covered with the outer layer portion 23.

Thus, according to the above-described second embodiment, when the crossing groove portion 41 is formed along a direction crossing the groove portion 21, in the cover portion 20 of the rim portion 15, and the heater wire 22 is continuously housed in the crossing groove portion 41 and the groove portion 21, it is possible to lead the heater wire 22 that makes substantially one round around the circumferential direction of the rimportion 15 so that the heater wire 22 wouldbe otherwise one seamless circle, in a so-called non-contact manner, by the crossing groove portion 41 (crossing groove portions 42, 43) and it is also possible to pull out, by the crossing groove portion 41, the end of the heater wire 22 toward the inner circumferential side, etc. , of the rimportion 15. As a result, it is possible to easily connect the heater wire 22 to a power supply, etc.

Further, it is possible to reliably lead or pull out one heater wire 22 with a simple structure, and thus, the present invention excels in workability in arranging the heater wire 22, therefore excellent workability in arrangement of the heater wiring 22 can be provided and variation in performance is less likely to occur.

In addition, in the above-described second embodiment, as in a third embodiment shown in Fig. 5, when a crossing groove portion 44 extending vertically toward the inner circumferential side of the rim portion 15 is formed along a direction crossing the groove portion 21 and also when a crossing groove portion 45 crossing the rim portion 15 and the crossing groove portion 44 is formed, a similar operation and effect can be provided.

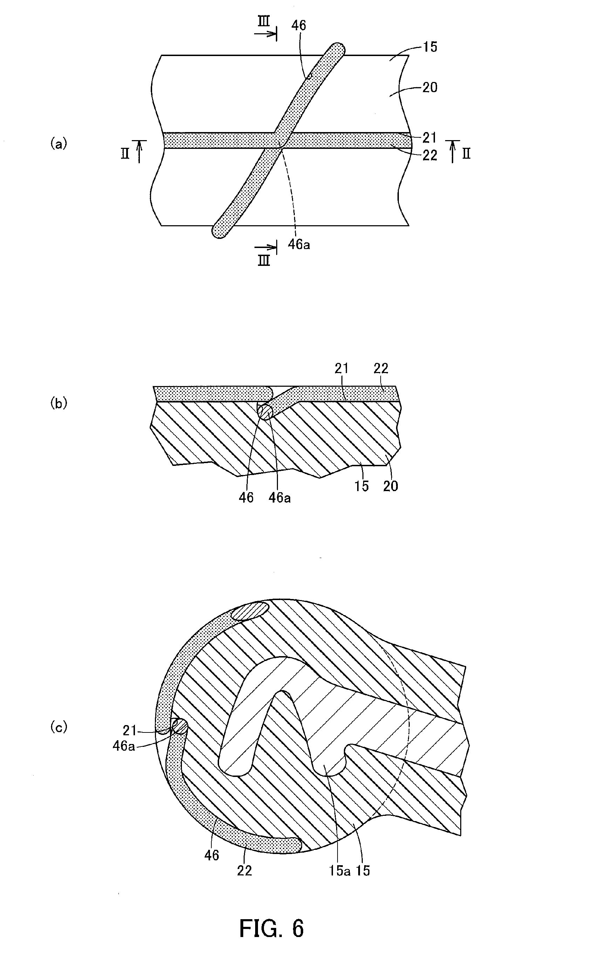

Further, as in a fourth embodiment shown in Fig. 6, a crossing groove portion 46 extending vertically toward the inner circumferential side of the rim portion 15 is formed along a direction crossing the groove portion 21, and at a crossing position 46a between the crossing groove portion 46 and the groove portion 21, the crossing groove portion 46 is formed, that is, deeply engraved, for example, to have a depth more than twice of the outer diameter dimension of the heater wire 22. In this case, when the heater wire 22 is wired so that one part thereof is slid beneath the other part thereof, inotherwords, in a non-contact manner, at the crossingposition 4 6a between the crossing groove portion 4 6 and the groove portion 21 (Fig. 6(b)), it is possible to provide a similar operation and effect to those of the above-described second and third embodiments, it is alsopossible tomore easily form the crossing groove portion 46 because it is possible to lead the heater wire 22 with only one crossing groove portion 46, and it is also possible to restrain the influence by the shape of the crossing groove portion 46 during the formation of the outer layer portion 23 by covering the cover portion 20 and the heater wire 22. In addition, if the heater wire 22 is coated with resin, a change in electric property caused by the contact by the crossing heater wire 22 will not be an issue. Further, the heater wire 22 substantially crossing at the crossing position 46a between the crossing groove portion 46 and the groove portion 21 will not protrude outside the cover portion 20, and the line of the heater wire 22 is less likely to stand out on the outer layer portion 23.

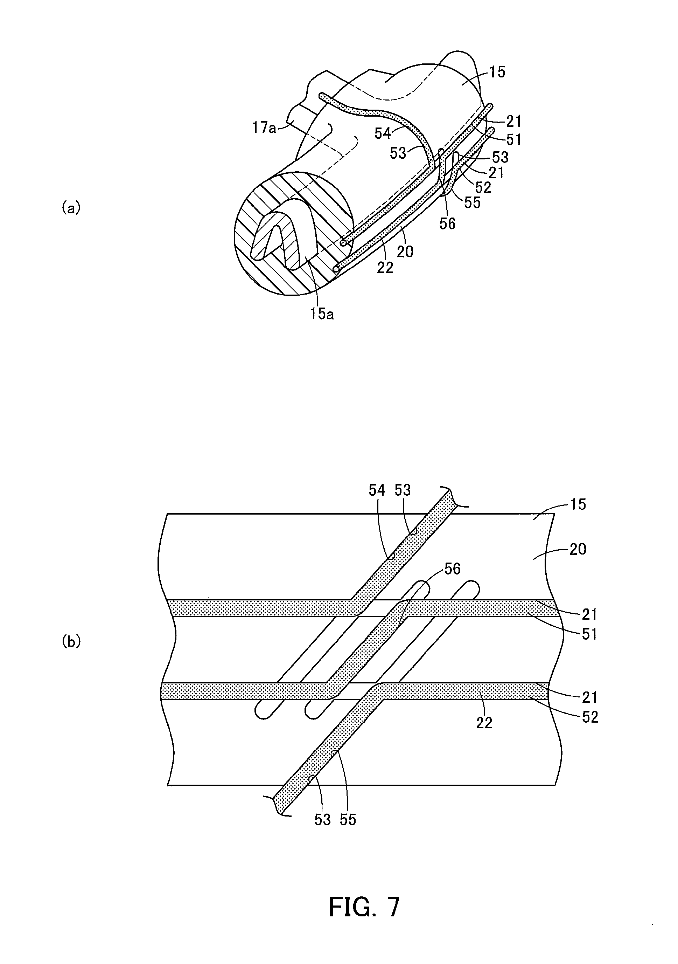

Next, a fifth embodiment will be described with reference to Fig. 7. In addition, a configuration and an operation in the same way as in each of the above-described embodiments will be assigned identical reference numerals and symbols to omit duplicated description.

In the present embodiment, a plurality of, e.g., two groove portions 21 are set (one and the other groove portions 51, 52), a plurality of, e.g., two crossing groove portions 53 (one and the other crossing groove portions 54, 55) crossing the groove portions 21 are set, and a connection groove portion 56, crossing the groove portions 21 (one and the other groove portions 51, 52), for connecting the groove portion 21 (one and the other groove portions 51, 52) is formed.

The one groove portion 51 and the other groove portion 52 are formed symmetrical to each other vertically and almost parallel to each other, at a position to vertically sandwich a center position in the up-down direction of the outer circumference of the rim portion 15, for example.

Further, the one crossing groove portion 54 connects the groove portions 51, 52, and is formed to extend upward from the one groove portion 51 to the inner circumferential side of the rim portion 15.

Further, the other crossing groove portion 55 connects the groove portions 51, 52, and is formed to extend downward from the other groove portion 52 to the inner circumferential side of the rim portion 15.

Further, the one and the other crossing groove portions 54, 55 are disposed at positions deviated from each other in the circumferential direction of the rim portion 15.

Moreover, the connection groove portion 56 is positioned between the one and the other crossing groove portions 54, 55, and the both ends are positioned near the groove portions 51, 52.

Further, during the formation of the crossing groove portion 53 and the connection groove portion 56, the rotary blade 38 of the cutting device 34 may be used for each of these portions to control the position of the rotary blade 38, and a crossing groove portion-use cutting device (crossing groove portion-use cutting member) not shown, which is separately configured similarly to the cutting device 34, for example, for forming the crossing groove portion 53 or a connection groove portion-use cutting device (connection groove portion-use cutting member) not shown for forming the connection groove portion 56 may be used.

Further, when the heater wire 22 is disposed, the remote end side of the heater wire 22 is fitted, for example, to the other crossing groove portion 55, the outer circumferential side of the compressing roller 39 of the compressing device 35 is inserted into the other groove portion 52 and the intermediate body 32 (rim portion 15) is rotated by the rotary device 33. Then, the heater wire 22 is changed in orientation at the crossing position between the other crossing groove portion 55 and the other groove portion 52 and circled along the other groove portion 52, and from the other groove portion 52, the heater wire 22 is changed in orientation at the crossing position between the other groove portion 52 and the connection groove portion 56 to be fitted to the connection groove portion 56, and further, the heater wire 22 is changed in orientation at the crossing position between the connection groove portion 56 and the one groove portion 51 and circled along the one groove portion 51. Thereafter, the compressing roller 39 is separated from the cover portion 20 of the rim portion 15 and the heater wire 22 is cut, and the end of the heater wire 22 protruding from the one groove portion 51 is changed in orientation, for example, at the crossing position between the one groove portion 51 and the one crossing groove portion 54, and fitted to the one crossing groove portion 54. Then, the rotary device 33 is stopped and the intermediate body 32 is removed, and the intermediate body 32 is inserted into the mold die, and the heater wire 22 and the cover portion 20 are collectively over-molded, for example, to be covered with the outer layer portion 23.

Thus, according to the above-described fifth embodiment, when a plurality of groove portions 21 (one and the other groove portions 51, 52) are arranged in the cover portion 20 of the rim portion 15, the groove portions 21 (the one and the other groove portions 51, 52) are connected by the connection groove portion 56, and the heater wire 22 is continuously housed in the connection groove portion 56 and the groove portion 21, it is possible to easily dispose one heater wire 22 over a wider area of the cover portion 20 of the rim portion 15.

Further, with the crossing groove portion 53 in the same way as in the above-described crossing groove portions 41, 44, 45, 46, it is possible to lead the heater wire 22 that makes substantially one round around the circumferential direction of the rim portion 15 so that the heater wire 22 would be otherwise one seamless circle, in a so-called non-contact manner, and it is also possible to pull out the end of the heater wire 22 toward the inner circumferential side, etc. , of the rim portion 15. As a result, it is possible to more easily connect the heater wire 22 to a power supply, etc.

The groove portion 21 may be partially deepened, or shallowed, or the depth from the surface of the heater wire 22 may be changed. At a portion where the groove portion 21 is deepened, the heat generated from the heater wire 22 may be distributed in a wide range so that a temperature on the immediately-above surface rises gradually. At a portion where the groove portion 21 is shallowed, the heater wire 22 conversely allows the temperature on the immediately-above surface to rise sharply in a relatively narrow range. When the heater wire 22 is positioned at a portion having a depth half the outer diameter dimension of, for example, the heater wire 22 of the groove portion 21 and is compressed and held at a position having a depth substantially equivalent to the outer diameter dimension of the both heater wire 22 near the both half portions, it is possible to adjust to provide a more preferable heating property to a site different on the steering wheel 10.

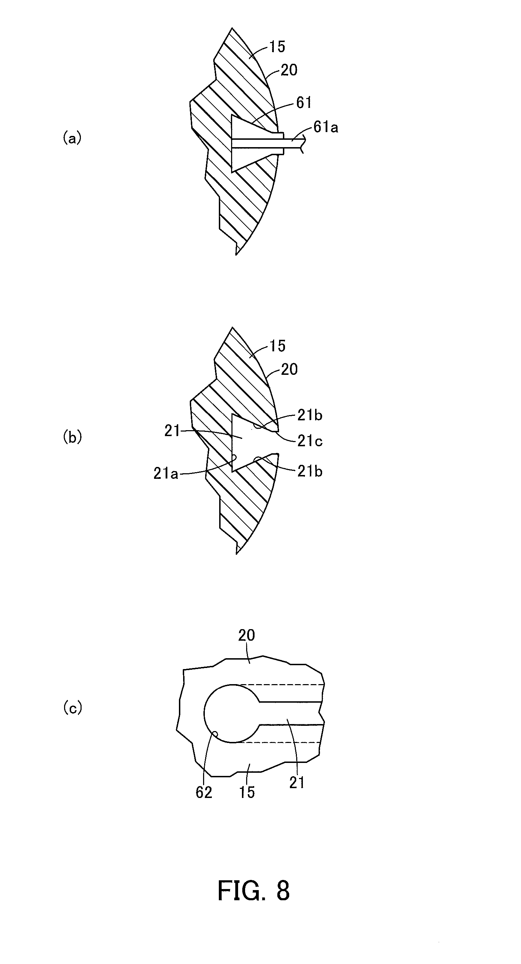

In addition, in each of the above-described embodiments, as in a sixth embodiment shown in Fig. 8, instead of the disk-shaped rotary blade 38 of the cutting device 34, a rotary blade 61, which is a cuttingmember, maybe usedwhich is inclined in an enlarging manner from a base end side to a remote end side in a radial direction relative to a rotation shaft 61a. In this case, although the position of the rotary blade 61 to start cutting is a circular portion 62 of a circular shape as seen in a front view, the groove portion 21 is formed continuously to the circular portion 62. Further, the groove portion 21 is formed so that the side surface portions 21b, 21b are inclined to gradually approach each other toward the opening portion 21c and the opening portion 21c of the formed groove portion 21 is a narrow width portion, which is narrower than the interior of the groove portion 21 and smaller than the outer diameter dimension of the heater wire 22, in other words, the groove portion 21 is formed so that the opening portion 21c is the narrowest and is expanded gradually toward the bottom surface portion 21a. Thus, it is possible to effectively hold the heater wire 22 housed in the groove portion 21 by the side surface portions 21b, 21b, and possible to more reliably hold the heater wire 22 in the groove portion 21.

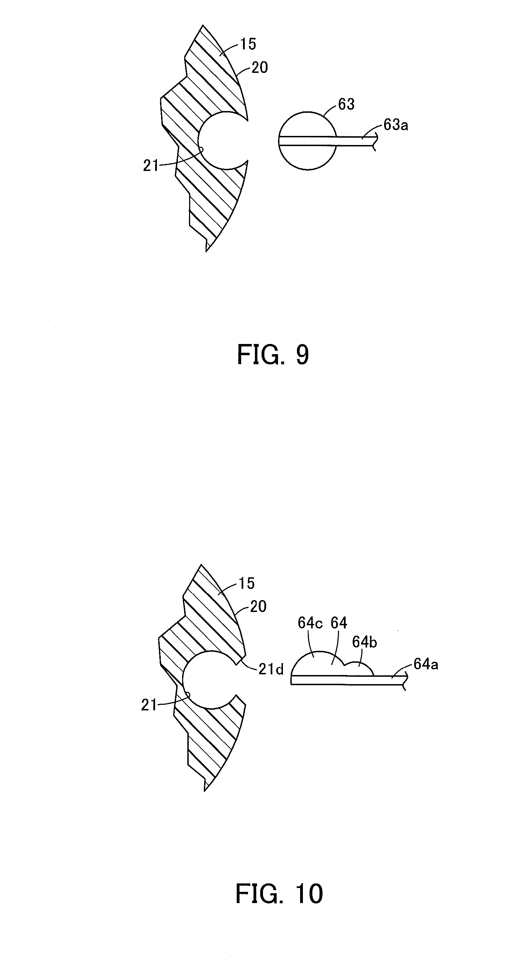

Further, in the above-described first to fifth embodiments, as in a seventh embodiment shown in Fig. 9, instead of the disk-shaped rotary blade 38 of the cutting device 34, a rotary blade 63, which is a cutting member, may be used which protrudes in a circular shape (semicircular shape) in a radial direction relative to the rotation shaft 63a. In this case, the cross section of the formed groove portion 21 is of a circular shape, and as a result, the opening portion 21c is a narrow width portion narrower than the interior of the groove portion 21. Thus, it is possible to more reliably hold the heater wire 22 housed in the groove portion 21, in the groove portion 21. Further, when the outer diameter dimension of the rotary blade 63 substantially matches the outer diameter dimension of the heater wire 22, the cross-sectional shape of the groove portion 21 is of a shape complimentary to the heater wire 22, and thus, it is possible to more reliably hold the heater wire 22 in the groove portion 21.

Further, in the above-described first to fifth embodiments, as shown in an eighth embodiment shown in Fig. 10, instead of the disk-shaped rotary blade 38 of the cutting device 34, it may be possible to use a rotary blade 64, which is a cutting member of a so-called semi-gourd shape, which is obtained by connecting one circular arc portion 64b having a relatively small diameter and being located at a base end side relative to the rotation shaft 64a and the other circular arc portion 64c having a relatively large diameter and being located at a remote end side relative thereto. In this case, the cross section of the formed groove portion 21 is of a circular shape by the other circular arc portion 64c, and the edge of the opening portion 21c is a chamfering portion 21d gradually enlarged outward by the one circular arc portion 64b. Therefore, it is possible to easily compress and house the heater wire 22 in the groove portion 21 by the chamfering portion 21d, and the workability of housing is further improved.

Further, the rotary blades 61, 63, 64 according to the sixth to eighth embodiments may each be used during the formation of the crossing groove portions 41, 44, 45, 46, 53 and the connection groove portion 56.

In each of the above-described embodiments, for the compressing member,any configuration may be used. For example, configuration can be adopted in which an insertion portion which can be inserted into the groove portion 21 is formed at a remote end of a holding portion for detachably holding the heater wire 22, the heater wire 22 held in the holding portion is inserted into the groove portion 21 by the insertion portion, and thereafter, the holding of the heater wire 22 by the holding portion is released and the heater wire 22 is compressed into the groove portion 21 to remain within the groove portion 21. That is, when the heater wire 22 is housed in the groove portion 21, labor-saving is possible by using any simple jig.

Further, when the heater wire 22 is fitted, without a level difference, to the groove portion 21, not only the configuration in which overmolding is performed by composite resin as the outer layer portion 23 but also configuration in which leather is wound, for example, may be adopted.

Further, a plurality of groove portions 21 may be formed in a spiral shape on the outer circumference of the rim portion 15. In this case, the groove portion 21 is formed in a single stroke manner, and thus, it is easier to form the groove portion 21 by each rotary blade 38, 61, 63, or 64, etc.

The above-described groove portion 21 may be formed on the inner circumference of the rim portion 15 as well as on the outer circumference of the rim portion 15. For example, each rotary blade 38, 61, 63, 64 is attached to a remote end of an arm of an NC-controlled multi-axis robot and a blade of each rotary blade 38, 61, 63, 64 is moved, as if to draw a circular arc, in an inner circumferential portion of the rim portion 15 between the adjacent two spoke portions 17. In this way, the groove portion 21 in which the heater wire 22 can be compressed may be formed. Further, from the rim portion 15, which is a connection portion of the spoke portion 17, the crossing groove portion is formed by allowing the spoke portion 17 to draw a three-dimensional curve, and the crossing groove portion may be linked with the groove portion 21, etc. , provided on the outer circumference of the rim portion 15. When the rotary blade is an endmill, it is possible to engrave the groove portion 21 by allowing the above-described multi-axis robot to draw a freely changing curve even on a three-dimensional surface changing in a complicated manner such as an inner circumferential portion of the steering wheel 10.

Further, the steering wheel 10 is not limited to the configuration where three spoke portions 17 are provided, and the steering wheel 10 may also be applied to the configuration where, for example, four spoke portions 17 are provided.

Then, instead of the air bag device, for example, a pad body in which an impact absorber is housed may be used.

### INDUSTRIAL APPLICABILITY

The present invention can be suitably used as, for example, a steering wheel of an automobile, and a method and an apparatus for manufacturing the same.

### REFERENCE SIGNS LIST

- 10: steering wheel which is so-called steering handle
- 15: rim portion
- 20: cover portion, i.e., surface portion
- 21: groove portion
- 21c: opening portion
- 22: heater wire
- 23: outer layer portion
- 31: manufacturing apparatus
- 38, 61, 63, 64: rotary blade, i.e., cutting member
- 39: compressing roller, i.e., compressing member
- 41, 44, 45, 46, 53: crossing groove portion
- 56: connection groove portion

## Claims

1. A steering handle, comprising:
an operation rim portion having a shape at least partially along a circular arc;
a groove portion arranged, along a circumferential direction of the circular arc, on a surface portion of the rim portion;
a heater wire that is housed in the groove portion and generates heat by energization; and
an outer layer portion that covers the heater wire and the surface portion of the rim portion.

2. The steering handle according to claim 1, wherein
in the rim portion, at least a surface portion is made from an elastic body, and
in the groove portion, an opening portion communicating with at least the outside of the rim portion is set to be smaller than an outer diameter dimension of the heater wire.

3. The steering handle according to claim 1 or 2, wherein
on the surface portion of the rim portion, a crossing groove portion crossing the groove portion is arranged, and
the heater wire is continuously housed in the crossing groove portion and the groove portion.

4. The steering handle according to any one of claims 1 to 3, wherein
a plurality of groove portions are arranged,
on the surface portion of the rim portion, a connection groove portion for connecting the groove portions is arranged, and
the heater wire is continuously housed in the connection groove portion and each of the groove portions.

5. A method for manufacturing a steering handle which comprises: an operation rim portion having a shape at least partially along a circular arc; a groove portion arranged, along the circular arc, on a surface portion of the rim portion; a heater wire that is housed in the groove portion and generates heat by energization; and an outer layer portion that covers the heater wire and the surface of the rim portion, comprising:
forming the groove portion, by using a cutting member, on the surface portion of the pre-formed rim portion; and
housing the heater wire in the groove portion.

6. An apparatus for manufacturing a steering handle, comprising: an operation rim portion having a shape at least partially along a circular arc; a groove portion arranged, along the circular arc, on a surface portion of the rim portion; a heater wire that is housed in the groove portion and generates heat by energization; and an outer layer portion that covers the heater wire and the surface portion of the rim portion, the apparatus comprising:
a cutting member for forming the groove portion on the surface portion of the rim portion by relative movement with respect to the rim portion; and
a compressing member for compressing the heater wire into the groove portion while relatively moving with respect to the rim portion.
